# EUROPEAN PATENT APPLICATION

(11) **EP 2 854 424 A1**
(43) Date of publication of application: **01.04.2015**
(21) Application number: 14275009.0
(22) Date of filing: 16.01.2014
(51) Int. Cl.: H04W 4/00, H04W 4/20, G09F 27/00

(54) **Electronic shelf label system and method of operating electronic shelf label system**

(30) Priority: 27.09.2013 KR 20130115390
(71) Applicant: Samsung Electro-Mechanics Co., Ltd., Gyeonggi-do (KR)
(72) Inventor: Sung,, Jong Woo, 443-743 Gyeonggi-do (KR); Na,, Young Il, 443-743 Gyeonggi-do (KR); Park,, Young Seo, 443-743 Gyeonggi-do (KR)
(74) Representative: Powell, Timothy John

(57) **Abstract**

The present invention relates to an ESL system in which a server generates update data, which can be processed by a gateway and an ESL, by receiving prioritized update commands, wherein the priorities include a first priority and a second priority lower than the first priority and the first priority update command is reflected in the ESL before the second priority update command to thereby process information, which needs to be rapidly reflected in the ESL, first.

## Description

### CROSS-REFERENCE TO RELATED APPLICATIONS

Claim and incorporate by reference domestic priority application and foreign priority application as follows:

### "CROSS REFERENCE TO RELATED APPLICATION

This application claims the benefit of Korean Patent Application Serial No. 10-2013-0115390, entitled filed September 27, 2013, which is hereby incorporated by reference in its entirety into this application."

### BACKGROUND OF THE INVENTION

### 1. Field of the Invention

The present invention relates to an electronic shelf label system and a method of operating an electronic shelf label system.

### 2. Description of the Related Art

Labels, which display product information and price, are used to display and sell a significant number of products in certain areas such as retail stores.

In general, price labels are attached near the corresponding products on display by directly writing product information necessary for sale, for example, price and discount information on paper by hand or printing the product information on paper according to the standardized format.

The conventional method as above seems to be simple and convenient and implemented at low cost, but the existing paper label application method has limitations in the areas, such as large retail stores, in which the standardized formats are used for tens of thousands of product items and product fluctuation occurs at any time.

That is, when the price fluctuation of some of the numerous product items occurs, it is needed to correct and change the labels in the location of the corresponding products displayed in the retail stores after picking out the corresponding labels and manually writing or printing the product information such as the changed prices.

Therefore, whenever the price information of the products is changed, the time and workforce for the correction and change are needed and the need for improvement of this is on the rise due to the properties of the large retail stores.

That is, there is a need to develop a means for changing product information rapidly, accurately, and simply at minimum costs.

In recent times, in order to satisfy the needs of the market, there are attempts to replace the existing paper label with an electronic tag using an electronic device, and related technologies are disclosed in many documents such as Patent Document 1 and Patent Document 2.

According to the language/cultural differences of organizations and countries in which the related technologies have been developed, various terms such as an electronic shelf label (ESL), an electronic price label (EPL), and an electronic information label (EIL) are used, but it is due to the cultural/language differences in recognizing and describing the label and the electronic tag and thus there are not much difference in the purpose and use thereof.

Hereinafter, in the present invention, it will be referred to as "electronic tag" in Korean and "ESL" in English.

Meanwhile, the type and quantity of the products displayed in the retail stores are rapidly increased according to the trend of the larger retail stores to which an ESL system is applied. Accordingly, the quantity of the ESLs which display information about the products is also rapidly increased.

As a result, the time required to reflect the corresponding contents in the ESL after a manager commands the ESL to display predetermined information is increased.

In addition, it is common that the conventional ESL system processes the previously input command first in performing most processes.

Therefore, it is difficult to rapidly process the processes requiring rapid processing since even the processes requiring rapid processing can be processed after the previous processing is completed in a state in which the commands to be processed by the ESL system are already accumulated.

### [Related Art Document]

### [Patent Document]

Patent Document 1: U.S. Patent Publication No. 2010-0205000
Patent Document 2: U.S. Patent Publication No. 2010-0106588

### SUMMARY OF THE INVENTION

The present invention has been invented in order to overcome the above-described problems and it is, therefore, an object of the present invention to provide an electronic shelf label (ESL) system that can process information, which needs to be rapidly reflected in an ESL, first.

It is another object of the present invention to provide a method of operating an ESL system that can process information, which needs to be rapidly reflected in an ESL, first.

In accordance with one aspect of the present invention to achieve the object, there is provided an ESL system including a server, a gateway, and an ESL, wherein the server may generate update data, which can be processed by the gateway and the ESL, by receiving prioritized update commands, wherein the priorities may include a first priority and a second priority lower than the first priority and the first priority update command may be reflected in the ESL before the second priority update command.

At this time, the server may include a priority checking unit for checking the priority of the update command input to the server; and an update data generation unit for generating the update data by processing the first priority update command before the second priority update command.

Further, the priority checking unit may cancel update data generation for a first update command when a second update command for a first product is input to the server before the update data generation unit processes the first update command for the first product.

Further, the gateway may receive the update data from the server to transmit the update data to the ESL, wherein the update data may include the priority and the update data including the first priority may be transmitted to the ESL before the update data including the second priority.

Further, the gateway may cancel transmission of first update data when second update data for the first product is input to the gateway before the first update data for the first product is transmitted to the ESL.

Further, the gateway may include a communication module for receiving the update data from the server to transmit the update data to the ESL; a memory for storing the update data; and a control module for controlling the communication module to transmit the update data including the first priority to the ESL before the update date including the second priority by checking the priority included in the update data.

At this time, the control module may cancel the transmission of the first update data when the second update data for the first product is input to the gateway before the first update data for the first product is transmitted to the ESL.

Further, the ESL system may further include a management terminal for transmitting an assign request signal including an identification number of the ESL to the server, and the server may process the assign request signal before the update command.

In accordance with another aspect of the present invention to achieve the object, there is provided a method of operating an ESL system including a server, a gateway, and an ESL, including the steps of: receiving prioritized update commands by the server; generating update data, which can be processed by the gateway and the ESL, and transmitting the update data to the gateway by the server; and transmitting the update data to the ESL after receiving the update data by the gateway, wherein the priorities may include a first priority and a second priority lower than the first priority and the first priority update command may be reflected in the ESL before the second priority update command.

At this time, in the step of generating the update data, which can be processed by the gateway and the ESL, and transmitting the update data to the gateway by the server, the first priority update command may be processed before the second priority update command to be generated as the update data.

Further, the method of operating an ESL system may further include the step of canceling update data generation for a first update command when a second update command for a first product is input to the server before the first update command for the first product is processed.

Further, the update data may include the priority, and in the step of transmitting the update data to the ESL after receiving the update data by the gateway, the update data including the first priority may be transmitted to the ESL before the update data including the second priority.

Further, the method of operating an ESL system may further include the step of canceling the update data generation for the first update command when the second update command for the first product is input to the server before the first update command for the first product is processed.

Further, when the server receives an assign request signal including an identification number of the ESL, the server may process the assign request signal before the update command.

### BRIEF DESCRIPTION OF THE DRAWINGS

These and/or other aspects and advantages of the present general inventive concept will become apparent and more readily appreciated from the following description of the embodiments, taken in conjunction with the accompanying drawings of which:
FIG. 1 is a view schematically showing an ESL system in accordance with an embodiment of the present invention;
FIG. 2 is a view schematically showing a server of the ESL system in accordance with an embodiment of the present invention;
FIG. 3 is a view schematically showing a gateway of the ESL system in accordance with an embodiment of the present invention;
FIG. 4 is a view schematically showing an ESL of the ESL system in accordance with an embodiment of the present invention;
FIG. 5 is a view schematically showing a method of operating an ESL system in accordance with an embodiment of the present invention;
FIG. 6 is a view schematically showing a method of operating an ESL system in accordance with another embodiment of the present invention; and
FIG. 7 is a view schematically showing a method of operating an ESL system in accordance with another embodiment of the present invention.

### DETAILED DESCRIPTION OF THE PREFERABLE EMBODIMENTS

Advantages and features of the present invention and methods of accomplishing the same will be apparent by referring to embodiments described below in detail in connection with the accompanying drawings. However, the present invention is not limited to the embodiments disclosed below and may be implemented in various different forms. The embodiments are provided only for completing the disclosure of the present invention and for fully representing the scope of the present invention to those skilled in the art. Like reference numerals refer to like elements throughout the specification.

Terms used herein are provided to explain embodiments, not limiting the present invention. Throughout this specification, the singular form includes the plural form unless the context clearly indicates otherwise. When terms "comprises" and/or "comprising" used herein do not preclude existence and addition of another component, step, operation and/or device, in addition to the above-mentioned component, step, operation and/or device.

For simplicity and clarity of illustration, the drawing figures illustrate the general manner of construction, and descriptions and details of well-known features and techniques may be omitted to avoid unnecessarily obscuring the discussion of the described embodiments of the invention. Additionally, elements in the drawing figures are not necessarily drawn to scale. For example, the dimensions of some of the elements in the figures may be exaggerated relative to other elements to help improve understanding of embodiments of the present invention. The same reference numerals in different figures denote the same elements.

The terms "first," "second," "third," "fourth," and the like in the description and in the claims, if any, are used for distinguishing between similar elements and not necessarily for describing a particular sequential or chronological order. It is to be understood that the terms so used are interchangeable under appropriate circumstances such that the embodiments of the invention described herein are, for example, capable of operation in sequences other than those illustrated or otherwise described herein. Similarly, if a method is described herein as comprising a series of steps, the order of such steps as presented herein is not necessarily the only order in which such steps may be performed, and certain of the stated steps may possibly be omitted and/or certain other steps not described herein may possibly be added to the method.

The terms "left," "right," "front," "back," "top," "bottom," "over," "under," and the like in the description and in the claims, if any, are used for descriptive purposes and not necessarily for describing permanent relative positions. It is to be understood that the terms so used are interchangeable under appropriate circumstances such that the embodiments of the invention described herein are, for example, capable of operation in other orientations than those illustrated or otherwise described herein. The term "coupled," as used herein, is defined as directly or indirectly connected in an electrical or non-electrical manner. Objects described herein as being "adjacent to" each other may be in physical contact with each other, in close proximity to each other, or in the same general region or area as each other, as appropriate for the context in which the phrase is used. Occurrences of the phrase "in one embodiment" herein do not necessarily all refer to the same embodiment.

Hereinafter, configurations and operational effects of the present invention will be described in detail with reference to the accompanying drawings.

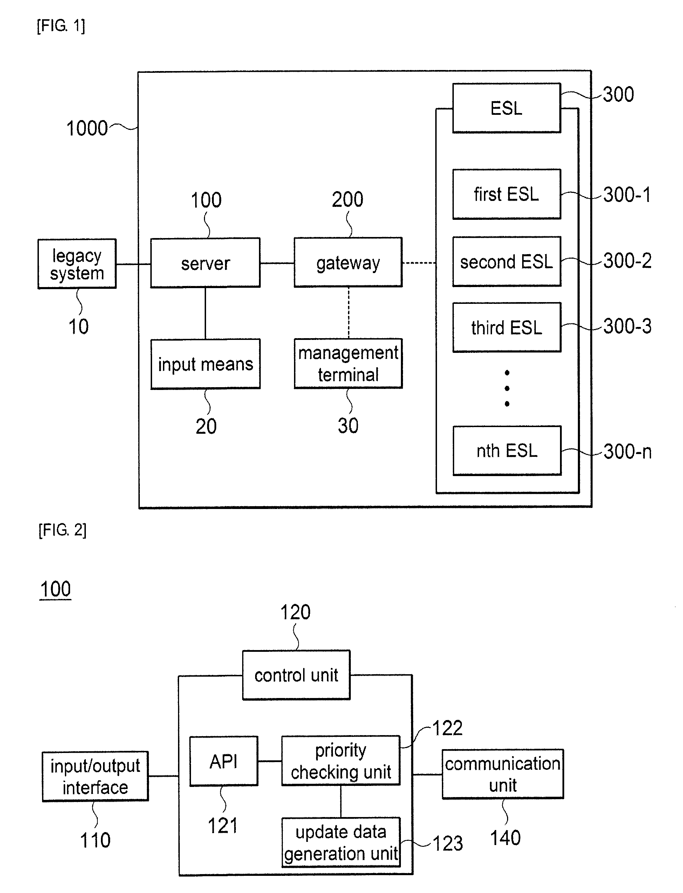

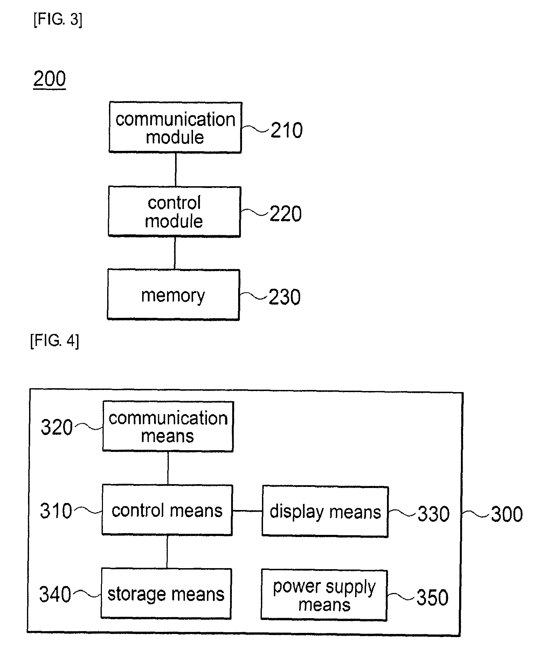

FIG. 1 is a view schematically showing an ESL system 1000 in accordance with an embodiment of the present invention, FIG. 2 is a view schematically showing a server 100 of the ESL system 1000 in accordance with an embodiment of the present invention, FIG. 3 is a view schematically showing a gateway 200 of the ESL system 1000 in accordance with an embodiment of the present invention, and FIG. 4 is a view schematically showing an ESL 300 of the ESL system in accordance with an embodiment of the present invention.

Referring to FIGS. 1 to 4, an electronic shelf label (ESL) system 1000 according to an embodiment of the present invention may include a server 100, a gateway 200, and an ESL 300.

Further, an input means 20 or a management terminal 30 may be further provided when necessary.

The server 100 may perform a function of receiving an update command to allow the ESL 300 to display predetermined information.

At this time, as an example, the update command may be a command to display a price of a product X as EUR 100.

This update command may be transmitted to the server 100 from a separate legacy system 10 through wired/wireless communication networks.

Further, the update command may be input to the server 100 by a manager who inputs predetermined update information through the input means 20 directly connected to the server 100. At this time, the input means 20 may be a PC or a POS terminal which is locally connected to the server 100.

Meanwhile, in an embodiment, the update commands may be prioritized. At this time, the priorities may be classified into several levels when necessary. For example, the priorities may be classified into a first priority and a second priority, and the first priority may be higher than the second priority.

The ESL system 100 according to an embodiment of the present invention may reflect a high-priority update command in the ESL 300 preferentially in processing the update commands.

In an embodiment of the present invention, a first priority update command may be reflected in the ESL 300 before a second priority update command.

For example, suppose that the update command to display the price of the product X as EUR 100 is input to the server 100.

The server 100 may receive the update command, generate update data, and transmit the update data to the gateway 200. And the gateway 200 may transmit the update data to the ESL 300. Further, the ESL 300 may analyze the update data and output the update data to a screen etc. after receiving the update data. Here, the update data is data for allowing the ESL 300 to perform an operation corresponding to the update command and may be formed in a data type that can be processed by the gateway 200 and the ESL 300.

That is, the update command to display the price of the product X as EUR 100 may be generated as the update data, that is, digital data including information such as a product code of the product X, an identification code of the ESL 300 that displays information about the product X, and the price (EUR 100) and transmitted to the ESL 300 that displays the information about the product X through the gateway 200. And the ESL 300, which displays the information about the product X, may display the price (EUR 100) etc. included in the update data.

However, there may be a situation in which an event that temporarily discounts a price of a product Y from EUR 200 to EUR 150 is planned and the time when the event starts is imminent.

At this time, if the previous update command (for example, the update command to display the price of the product X as EUR 100) is already reflected in the ESL 300 and predetermined time is needed to complete the process, it is difficult to immediately reflect a process of reflecting the event that discounts the price of the product X in the ESL 300.

In this case, in the ESL system 1000 according to an embodiment of the present invention, a high priority may be given to the update command to reflect the event that discounts the price of the product Y in the ESL 300.

Accordingly, the update command to reflect the event that discounts the price of the product Y in the ESL 300 can be processed first and transmitted to the ESL 300 to be reflected in the ESL 300 even before reflecting all of the previous update commands (for example, the update command to display the price of the product X as EUR 100) in the ESL 300.

That is, it is also possible to quickly reflect the update requiring urgent processing by setting the priority of the update command to display the price of the product Y as EUR 150 higher than the priority of the update command to display the price of the product X as EUR 100 and reflecting the high-priority update command in the ESL 300 first.

Here, the priorities may be assigned to all the update commands. Further, a high priority may be assigned only to the update command requiring urgent processing without assigning a separate priority to the update command to perform a normal process.

Further, the priorities may be assigned by being classified into more than two levels.

Meanwhile, in addition to the update commands, processes needed to be processed preferentially than the update process, which are typically performed in the ESL system 1000, for example, an assign request signal may be processed before other update commands.

Here, the assign request signal is a signal for newly registering the ESL 300, which is not registered in the server 100 yet, and means a signal including the identification number of the ESL 300.

In order to normally transceive data and display information about specific products by the ESL 300 in the ESL system 100, the ESL 300 is needed to be registered in the server 100. Like this, the assign request signal may be used to register the ESL 300 in the server 100.

This assign request signal may be generated by the management terminal 30, such as a PDA, and transmitted to the server 100. At this time, if the management terminal 30 transmits the assign request signal through wireless communication, the assign request signal transmitted from the management terminal 30 may be transmitted to the server 100 through the gateway 200.

Meanwhile, the assign request signal may include the matching product code of the product whose information is displayed by the corresponding ESL 300 together with the identification number of the ESL 300. At this time, the identification number of the ESL 300 may be a MAC address.

For example, when the first ESL 300, which displays the information about the product

X, can't perform a normal operation, the manager may replace the first ESL 300 with the 1-1th ESL 300. At this time, since the first ESL 300 is registered in the server 100 to display the information about the product X, the update data may be continuously generated and transmitted by setting the first ESL 300 as a destination unless a separate action is taken.

Therefore, when the first ESL 300 is replaced with the 1-1th ESL 300, information that the 1-1th ESL 300 displays the information about the product X should be reflected in the server 100.

The above management terminal 30 may generate the assign request signal, which matches the identification code of the 1-1th ESL 300 with the product code of the product X, and transmit the assign request signal to the server 100, and the server 100 may receive the assign request signal and store the assign request signal in a database 130 to register the 1-1th ESL 300 in the ESL system 1000.

In addition, in this process, the existing first ESL 300 may be deleted from the ESL system 1000.

In summary, this assign process seems to need to be processed preferentially than other update commands. For this, in the ESL system 1000 according to an embodiment of the present invention, this assign request signal may be processed before other typical update commands.

Meanwhile, in an embodiment, the server 100 may include a priority checking unit 122 and an update data generation unit 123.

At this time, the priority checking unit 122 may perform a function of checking the priority of the update command input to the server 100.

Further, the update data generation unit 123 may perform a function of generating the update data by processing the update command. And the update data generation unit 123 may perform an update generation process by considering the priority of the update command checked through the priority checking unit 122.

That is, even in a state in which the low-priority update command is not processed, if the high-priority update command is input, the high-priority update command may be processed first while deferring the processing of the low-priority update command.

In an embodiment, when the first priority update command is input in a state in which the second priority update commands are being sequentially processed, the first priority update command may be processed preferentially.

Further, in an embodiment, the update data generation unit 123 may generate the update data by parsing the update command.

These priority checking unit 122 and update data generation unit 123 may constitute a control unit 120, and the control unit 120 may be a Deamon formed by executing predetermined software using predetermined hardware.

In an embodiment, the server 100 may include an input/output interface 110 which is connected to the above legacy system 10 or input means 20 to receive the update command.

Further, the control unit 120 may further include an application programming interface (API) 121.

Further, in an embodiment, the server 100 may have a communication unit 140 which is connected to the control unit 120 to perform communication.

Meanwhile, in some cases, the update commands for the same product may be repeatedly input while having different contents.

That is, after the first update command for the first product is input, the second update command for the same first product may be input.

For example, after the first update command to display the price of the product X as EUR 100 is input, labeling may be corrected since it is found later that the price of the product X is EUR 130.

In this case, the second update command to display the price of the product X as EUR 130 may be input.

However, according to the conventional method, since the second update command is processed after the first update command is completely processed, the ESL 300 displays the incorrect information until the second update command is processed.

In this case, in the ESL system 1000 according to an embodiment of the present invention, the priority of the second update command may be set higher than the priority of the first update command. Accordingly, since the second update command can be processed preferentially, the time for which the ESL 300 displays the incorrect information can be reduced.

Furthermore, if it is before the first update command is reflected in the ESL 300, since the second update command is reflected in the ESL first, the ESL 300 doesn't display the incorrect information.

However, as the second update command is reflected in the ESL 300, the ESL 300 displays correct information well, but as the sequential processes are performed, if the first update command is reflected in the ESL 300, the ESL 300 displays the incorrect information in the end.

Therefore, the ESL system 1000 according to an embodiment of the present invention can cancel the previously input update command when the update commands for the same products are repeatedly input while having the different contents.

That is, when the second update command for the first product is input to the server 100 before the first update command for the first product is input to the server and processed, the first update command may be canceled.

In an embodiment, the priority checking unit 122 may perform a function of canceling the first update command.

Meanwhile, in some cases, the low-priority update command may be input later after the high-priority update command is input first.

That is, in some cases, the first priority update command may be input to the server 100 first, and the second priority update command may be input later.

In this case, so-called priority inversion that the first priority update command having a higher priority is canceled by the second priority update command may occur.

In this case, in an embodiment, the second priority update command may be ignored without canceling the first priority update command.

However, the second priority update command may be a proper update command even though it has a low priority. In this case, the first priority update command may be performed through the sequential processes after performing the first priority update command without canceling the second priority update command.

Further, the manager may separately set the processing conditions for this situation.

The gateway 200 of the ESL system 1000 according to an embodiment of the present invention may perform a function of receiving the update data from the server 100 to transmit the update data to the ESL 300.

Here, the update data may include the priorities. The priorities may be classified into the first priority and the second priority, and the first priority may be higher than the second priority.

In an embodiment, the gateway 200 may transmit the update data including the first priority to the ESL 300 before the update data including the second priority.

Meanwhile, as shown in FIG. 3, the gateway 200 of the ESL system 1000 according to an embodiment of the present invention may include a communication module 120, a control module 220, and a memory 230.

The communication module 120 may be connected to the server 100 to perform a function of receiving the above update data and transmitting the received update data to the ESL 300.

The memory 230 may store at least some of the update data received by the communication module 120.

The control module 220 may perform a function of controlling the communication module 120 and the memory 230 to transmit the update data to the ESL 300.

In an embodiment, the control module 220 may transmit the update data according to the priority by checking the priority included in the update data.

That is, the control module 220 may control the communication module 120 to transmit the update data including the first priority to the ESL 300 preferentially even though the update data including the second priority is being processed.

Further, in an embodiment, if the update data for the same product is repeatedly received in the gateway 200 while having the different contents and it is before the previous received update data is transmitted to the ESL 300, the gateway 200 may cancel the transmission of the previously received update data.

That is, the transmission of the first update data may be canceled when the second update data for the first product is received in the gateway 200 before the first update data for the first product is received in the gateway 200 and transmitted to the ESL 300.

This cancelation of the transmission of the first update data may be performed by the above control module 220.

Meanwhile, referring to FIG. 4, the ESL 300 of the ESL system 1000 according to an embodiment of the present invention may include a control means 310, a communication means 320, a display means 330, a storage means 340, and a power supply means 350.

In an embodiment, the ESL 300 may receive the data including the contents to be displayed from the gateway 200 through the communication means 320, and the control means 310 may analyze the received data and control the contents to be displayed through the display means 330.

Further, the storage means 340 may perform a function of storing the received data.

Further, the power supply means 350 may perform a function of supplying power to operate the ESL 300.

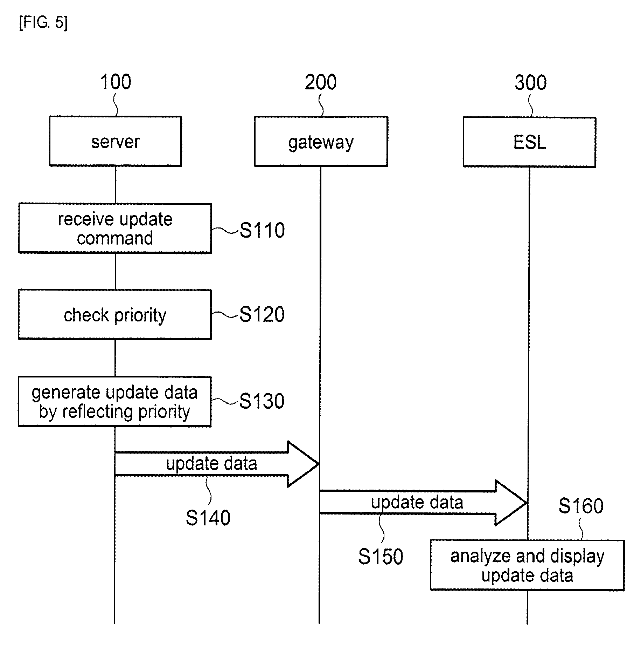

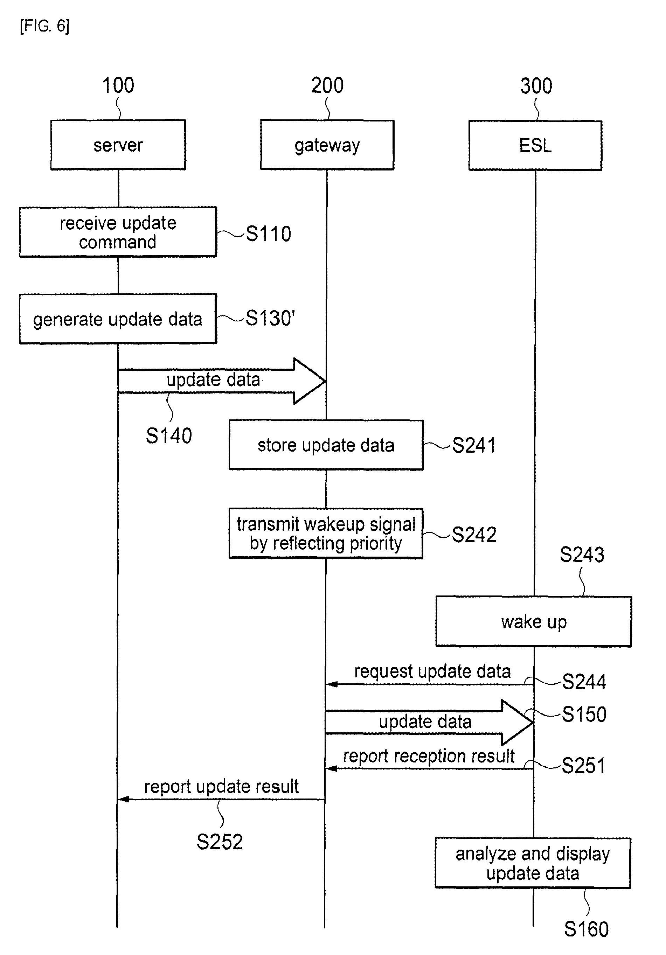

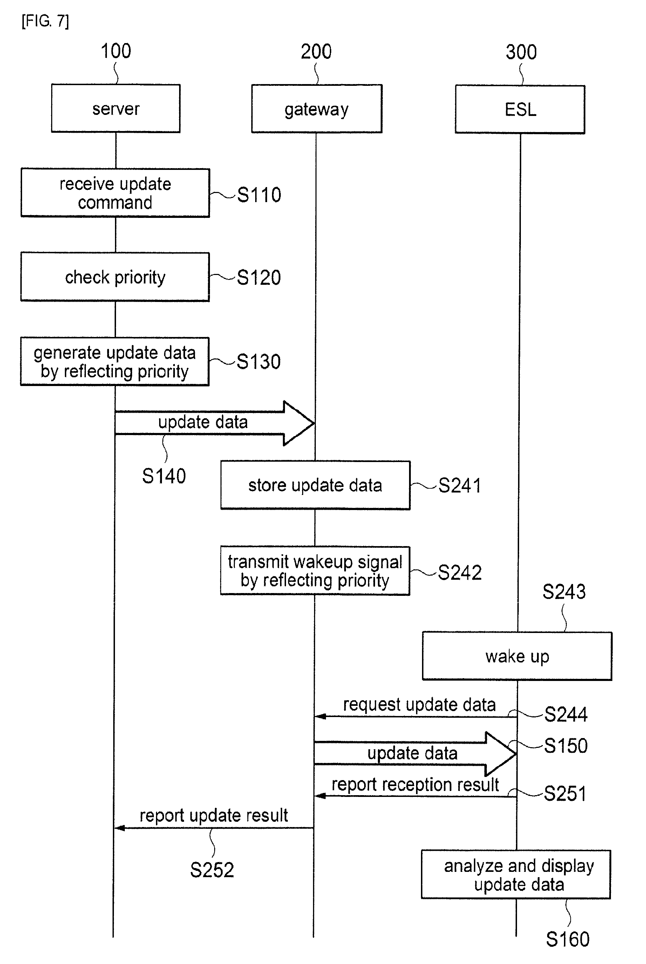

FIG. 5 is a view schematically showing a method of operating an ESL system in accordance with an embodiment of the present invention, FIG. 6 is a view schematically showing a method of operating an ESL system in accordance with another embodiment of the present invention, and FIG. 7 is a view schematically showing a method of operating an ESL system in accordance with another embodiment of the present invention.

Referring to FIGS. 5 to 7, a method of operating an ESL system in accordance with an embodiment of the present invention may include the steps of receiving a prioritized update command by a server 100, generating update data from the update command and transmitting the update data to a gateway 200, and transmitting the update data to an ESL 300. At this time, the high-priority update command may be reflected in the ESL 300 before the low-priority update command.

Referring to FIG. 5, according to a method of operating an ESL system in accordance with an embodiment of the present invention, a server 100 may receive a prioritized update command (S110), check a priority of the input update command (S120), and generate update data by reflecting the priority (S130).

The update data generated like this may be transmitted to the gateway 200 (S140), the gateway 200 may transmit the update data to the ESL 300 (S150), and the ESL 300 may analyze and display the update data (S160).

Accordingly, even the update command input later can be reflected in the ESL 300 first if its priority is high.

Referring to FIG. 6, in a method of operating an ESL system according to the present embodiment, a server 100 may receive a prioritized update command (S110), generate update data according to the input update command (S130'), and transmit the generated update data to a gateway 200 (S140). At this time, the update data may include a priority, and the gateway 200 receiving the update data may store the update data (S241).

Next, the gateway 200 may transmit a wakeup signal to an ESL 300 according to the priority included in the update data (S242).

Next, the ESL 300 receiving the wakeup signal may wake up (S243) and transmit an update data request to the gateway 200 (S244).

Next, the gateway 200 may transmit the update data to the ESL 300 according to the update data request (S150).

In an embodiment, the ESL 300 receiving the update data may report the reception result to the gateway 200 (S251).

Further, the gateway 200 may report the update result to the server 100 using the report of the reception result (S252).

Meanwhile, in determining the order to transmit the wakeup signal to the ESL 300, between the update data with the same priority, the wakeup signal may be transmitted in order of time received in the gateway 200. However, if the update data including a high priority is checked, the wakeup signal may be transmitted to the ESL 300, which is intended to receive the update data including a high priority, before the ESLs 300, which are intended to receive other update data.

Accordingly, in spite of the order of being transmitted to the gateway 200, the high-priority update data can be transmitted to the ESL 300 preferentially and displayed in the ESL 300.

Referring to FIG. 7, it can be understood that a method of operating an ESL system according to the present embodiment is a combination of the embodiment described above with reference to FIG. 5 and the embodiment described above with reference to FIG. 6.

Accordingly, it is possible to reflect the update command requiring urgent processing in the ESL 300 more quickly by processing the high-priority update command in the server 100 preferentially to generate the update data and transmitting the update data from the gateway 200 to the ESL 300 according to the priority at the same time.

According to an embodiment of the present invention, it is possible to reflect the information requiring urgent processing in the ESL quickly by reflecting the high-priority update command in the ESL faster than other update commands.

## Claims

1. An ESL system comprising a server, a gateway, and an ESL, wherein the server generate update data, which can be processed by the gateway and the ESL, by receiving prioritized update commands, wherein
the priorities include a first priority and a second priority lower than the first priority, and
the first priority update command is reflected in the ESL before the second priority update command.

2. The ESL system according to claim 1, wherein the server comprises:
a priority checking unit for checking the priority of the update command input to the server; and
an update data generation unit for generating the update data by processing the first priority update command before the second priority update command.

3. The ESL system according to claim 2, wherein the priority checking unit cancels update data generation for a first update command when a second update command for a first product is input to the server before the update data generation unit processes the first update command for the first product.

4. The ESL system according to one of claims 1 to 3, wherein the gateway receives the update data from the server to transmit the update data to the ESL, wherein
the update data includes the priority, and
the update data including the first priority is transmitted to the ESL before the update data including the second priority.

5. The ESL system according to claim 4, wherein the gateway cancels transmission of first update data when second update data for the first product is input to the gateway before the first update data for the first product is transmitted to the ESL.

6. The ESL system according to one of claims 1 to 3, wherein the gateway comprises:
a communication module for receiving the update data from the server to transmit the update data to the ESL;
a memory for storing the update data; and
a control module for controlling the communication module to transmit the update data including the first priority to the ESL before the update date including the second priority by checking the priority included in the update data.

7. The ESL system according to claim 6, wherein the control module cancels the transmission of the first update data when the second update data for the first product is input to the gateway before the first update data for the first product is transmitted to the ESL.

8. The ESL system according to claim 1, further comprising:
a management terminal for transmitting an assign request signal including an identification number of the ESL to the server, wherein
the server processes the assign request signal before the update command.

9. A method of operating an ESL system comprising a server, a gateway, and an ESL, comprising:
receiving prioritized update commands by the server;
generating update data, which can be processed by the gateway and the ESL, and transmitting the update data to the gateway by the server; and
transmitting the update data to the ESL after receiving the update data by the gateway, wherein
the priorities include a first priority and a second priority lower than the first priority, and
the first priority update command is reflected in the ESL before the second priority update command.

10. The method of operating an ESL system according to claim 9, wherein in generating the update data, which can be processed by the gateway and the ESL, and transmitting the update data to the gateway by the server, the first priority update command is processed before the second priority update command to be generated as the update data.

11. The method of operating an ESL system according to claim 10, further comprising:
canceling update data generation for a first update command when a second update command for a first product is input to the server before the first update command for the first product is processed.

12. The method of operating an ESL system according to one of claims 9 to 11, wherein the update data includes the priority, and
in transmitting the update data to the ESL after receiving the update data by the gateway, the update data including the first priority is transmitted to the ESL before the update data including the second priority.

13. The method of operating an ESL system according to claim 12, further comprising:
canceling the update data generation for the first update command when the second update command for the first product is input to the server before the first update command for the first product is processed.

14. The method of operating an ESL system according to claim 9, wherein when the server receives an assign request signal including an identification number of the ESL, the server processes the assign request signal before the update command.
